(19) Europäisches Patentamt
European Patent Office
Office européen des brevets

(11) **EP 2 477 010 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
*G01F 1/80* *(2006.01)*    *G01F 1/20* *(2006.01)*
*G01F 1/78* *(2006.01)*    *G01F 1/28* *(2006.01)*

(21) Anmeldenummer: **12000247.2**

(22) Anmeldetag: **17.01.2012**

(54) **Vorrichtung zur Messung des Massestromes von Fördergut in einer pneumatischen Förderleitung**

Device for measuring the mass flow of material in a pneumatic conveyor conduit

Dispositif de mesure du flux de masse de matériaux dans une tuyauterie de transport pneumatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.01.2011 DE 102011008842**

(43) Veröffentlichungstag der Anmeldung:
**18.07.2012 Patentblatt 2012/29**

(73) Patentinhaber: **Schenck Process Europe GmbH 64293 Darmstadt (DE)**

(72) Erfinder: **Weinand, Robert 63329 Egelsbach (DE)**

(56) Entgegenhaltungen:
**EP-A1- 0 158 745    WO-A1-94/15179**
**WO-A1-97/02470    DE-A1- 1 648 042**
**JP-A- 58 086 415    US-A- 2 804 771**
**US-A- 3 206 978**

EP 2 477 010 B1

## Beschreibung

Die Erfindung bezieht sich auf eine Vorrichtung zur Messung des Massestromes von Fördergut, insbesondere von Schüttgut in einer pneumatischen Förderleitung.

Bei der Zuführung von Kohlestaub in Verbrennungsanlagen kommt es auf äußerste Gleichmäßigkeit der Masseförderung an. Dies trifft auch auf Partner von chemischen Reaktionen in Reaktoren zu. Deshalb besteht ein Interesse, Masseströme sehr gleichmäßig zu fördern, und die Gleichmäßigkeit der Förderung überwachen zu können. Hierzu bedarf es der Messung des Massestroms von Fördergut, auch hinsichtlich von Schwankungen des Massestromes und die Erfindung hat mit der Messung des augenblicklichen Massestroms in einer pneumatischen Förderleitung zu tun.

Aus DE 10 2004 033 007 B3 ist eine Vorrichtung zur Durchsatzmessung eines Massestroms nach dem Coriolis-Prinzip bekannt, bei der der Materialstrom auf ein angetriebenes Flügelrad aufgegeben wird, d.h. der pneumatischen Förderleitung vorgeschaltet ist. Zwar kann der Massestrom sehr genau gemessen werden, wenn keine anbackenden Schüttgüter vorliegen, jedoch ist der gerätetechnische Aufwand hoch, und es wird nicht in der pneumatischen Förderlertung gemessen.

Um den Massedurchsatz in pneumatischen Förderleitungen zu messen, wird mit Radarimpulsen, Mikrowellen, Ultraschall oder in einem elektromagnetischen Messfeld gearbeitet (EP 0 717 269 A2, EP 0 703 447 A2). Die strömende bleibende, homogene Eigenschaft des Schüttgutes voraussetzt. Bei einer temporären Störung des vorgeschalteten Zuteilers werden keine verlässlichen Messergebnisse erzielt, ebenso bei Veränderungen der Korngrößen und bei Agglomerationen. Die JP 58 086415 A offenbart eine Vorrichtung, bei der die Fließrichtung eines Förderguts in einer pneumatischen Leitung mittels eines Rohrbogens umgelenkt und die Reaktionskraft des Rohrbogens aufgrund der Änderung der kinetischen Energie des Fluids im gebogenen Teil der Förderleitung über eine Kraftmesszelle erfasst wird. Aus der von der Kraftmesszelle ermittelten Kraft wird die momentane Förderrate oder der gesamte Massenstrom des Fördergutes über eine elektronische Einheit berechnet und angezeigt. Innere und äußere Störeinflüsse auf die Förderleitung und die Messstrecke werden jedoch nicht berücksichtigt oder kompensiert.

Der Erfindung liegt die Aufgabe zugrunde, eine Vorrichtung zur Messung des Massestromes von Fördergut in einer pneumatischen Förderleitung, wobei eine direkte, auf die Masse bezogene physikalische Größe gemessen wird, zu verbessern.

Gemäß der Erfindung wird der Massestrom von Fördergut in einer pneumatischen Förderleitung basierend auf einem Geräteteil gemessen, der eine schwebend aufgehängte oder frei drehend gelagerte Umlenkstrecke des Fördergutes umfasst, wobei Druckschwankungen in der Förderleitung im Bereich der Umlenkstrecke durch Berechnung des Störeinflusses korrigiert, oder durch eine Druckschwankungskompensationseinrichtung ausgeschaltet werden. Infolge der Umlenkung des Massestromes gibt es eine Impulsänderung und damit eine Reaktionskraft auf die Umlenkstrecke und infolge der schwebenden Aufhängung der Umlenkstrecke kann diese Reaktionskraft gemessen werden. Der Reaktionskraft entspricht die zeitliche Änderung des Impulses und daraus kann der augenblickliche Massestrom berechnet werden.

Somit ist es möglich, mit der erfindungsgemäßen Vorrichtung den Massestrom von Fördergut zu bestimmen und das Messergebnis ohne Unterbrechung der pneumatischen Förderung für weitere Zwecke zu nutzen. Die Messung kann sehr genau erfolgen, da die Messung auf einer eindeutigen mechanischen Kraft beruht und nicht abgeleitete Parameter zur Hilfe nehmen braucht.

Die Vorrichtung zur Messung des Massestroms von Fördergut in einer pneumatischen Förderleitung umfasst eine Zufuhrförderleitung, eine Abfuhrförderleitung und einen dazwischen angeordneten Rohrbogen, dessen Enden über flexible Verbindungsmuffen mit der Zufuhrförderleitung und der Abfuhrförderleitung verbunden sind. Um den Rohrbogen frei von schädlichen Kräften zu halten, wird er schwebend aufgehängt.

Es können jedoch auch innere störende Kräfte auftreten, bedingt durch Druckschwankungen in der Förderleitung, und diese Störeinflüsse werden bevorzugt durch einen Druckschwankungskompensator aufgehoben. Dieser Druckschwankungskompensator besteht aus einem zylindrischen Hohlraum mit einem Querschnitt Q7, der in einem bestimmten Verhältnis l1/l7 zum Eintrittsquerschnitt Q1 des Rohrbogens steht. Der Abstand zwischen Aufhängungspunkt und Eintrittsquerschnitt des Rohrbogens beträgt l1 und der Abstand zwischen Aufhängungspunkt und Kompensator beträgt l7. Der Hohlraum ist mit dem inneren des Rohrbogens über eine Ausgleichsleitung verbunden und in zwei Abschnitte unterteilt, die über eine flexible Verbindungsmuffe beweglich, jedoch abgedichtet miteinander verbunden sind. Der erste Abschnitt enthält ein geschlossenes Ende des zylindrischen Hohlraums, mit dem Flächenmaß Q7 im Abstand l7 vom Aufhängepunkt. Ferner ist der erste Abschnitt durch eine starre mechanische Koppelverbindung mit dem Rohrbogen verbunden. Der zweite Abschnitt des Druckschwankungskompensators wird ortsfest abgestützt. Druckschwankungen in der pneumatischen Förderleitung bewirken ein Drehmoment auf den aufgehängten Rohrbogen, dem ein Gegendrehmoment in gleicher Größe des Kompensators gegenübersteht. Der Druck auf die Endfläche des zweiten Abschnitts des Druckschwankungskompensators wirkt sich nicht auf den Rohrbogen aus, weil eine mechanische Entkopplung über die flexible Verbindungsmuffe zum ersten Abschnitt erfolgt. Somit wirkt sich nur der Impuls des Massestromes auf den Rohrbogen aus, der als Reaktionskraft an dem schwebend aufgehängten Rohrbogen gemessen werden kann. Daraus ist die Größe des Massestromes errechenbar.

Die Störeinflüsse auf die Messung des Massestroms können auch rechnerisch beseitigt werden, und zwar basierend auf der Messung des schwankenden statischen Überdruckes in der Förderleitung.

Um die horizontale Reaktionskraft des Fördergutes auf den Rohrbogen zu messen, wird der Rohrbogen von 90° mit vertikalem Eintrittsquerschnitt und horizontalem Austrittsquerschnitt angeordnet. Diese Gestaltung des Messaufbaus erleichtert die Berechnung des Massestromes.

Die Mittel zur schwebenden Aufhängung des Rohrbogens weisen eine frei drehbare Lagerung des Rohrbogens auf. Zu diesem Zweck sind eine Schwenkachse, eine gerätefeste Schwenklagerstelle und eine Nabe mit Speichen vorgesehen, die am Rohrbogen befestigt sind.

Ein Ausführungsbeispiel der Erfindung wird anhand der Zeichnung beschrieben. Dabei zeigt:

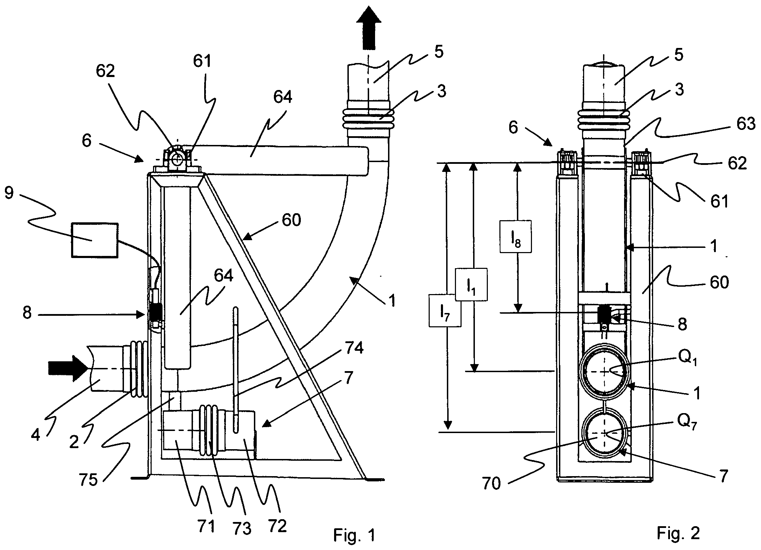

Figur 1 eine Seitenansicht der Messvorrichtung in schematischer Darstellung und

Figur 2 eine Frontansicht, teilweise geschnitten, der Messvorrichtung

Die Messvorrichtung wird im Zuge einer pneumatischen Förderleitung angeordnet und umfasst einen Rohrbogen 1, dessen Enden über flexible Verbindungsmuffen 2 und 3 mit einer Zuförderleitung 4 bzw. einer Abfuhrförderleitung 5 verbunden sind. Der Rohrbogen 1 erstreckt sich über 90° und sein Eintrittsquerschnitt bei der flexiblen Verbindung 2 zur Zufuhrförderleitung 4 ist vertikal, während der Austrittsquerschnitt bei der flexiblen Verbindung 3 zur Abfuhrförderleitung 5 horizontal ist. Der Rohrbogen 1 ist schwebend aufgehängt und hierzu dient eine frei drehbare Lagerung 6. Diese umfasst ein Schwenklagergestell 60 mit Achsschwenklager 61 und eine Achse 62, die über eine Nabe 63 und Speichen 64 mit dem Rohrbogen 1 verbunden sind, so dass dieser frei drehend aufgehängt Ist, ähnlich wie man es von einer Schaukel kennt.

Am unteren Ende des Rohrbogens 1 ist ein

Druckschwankungskompensator 7 angehängt, der einen Hohlraum 70 umfasst und aus zwei Rohrstücken 71 und 72 sowie einer flexiblen Verbindungsmuffe 73 aufgebaut ist. Der Querschnitt Q7 der Rohrstücke 71, 72 ist mit dem Reduktionsfaktor l1/l7 gegenüber dem Querschnitt Q1 der pneumatischen Förderleitung beziehungsweise des Rohrbogens 1 reduziert. Die Werte l1 und l7 betreffen den Abstand des Rohrbogens 1, beziehungsweise des Kompensators 7 von dem Aufhängepunkt 62 des Rohrbogens. Die Rohrstücke 71 und 72 sind an ihren Enden geschlossen. Der Hohlraum 70 des Druckschwankungskompensators 7 steht über eine Ausgleichsleitung 74 mit dem Inneren des Rohrbogens 1 in Verbindung. Zwischen dem Rohrstück 71, das einen ersten Abschnitt des Druckschwankungskompensators bildet, und dem Rohrbogen 1 gibt es eine starre Verbindungsbrücke 75, während das zweite Rohrstück 72, welches einen zweiten Abschnitt des Kompensators bildet, an Gestell 60 gerätefest abgestützt ist. Die flexible Verbindungsmuffe 73 erlaubt deshalb Pendelbewegungen des aufgehängten Rohrbogens 1, die äußerst rückstellkräftearm und als im Wesentlichen hysteresefrei betrachtet werden können, weil die Auslenkung der Pendelbewegung sehr klein ist, maximal im Bereich von 0,15 mm liegt.

Die in Rede stehende Auslenkung geht auf den Impuls des Massestromes beim Durchströmen des Rohrbogens 1 zurück und ist proportional zur Kraft, die eine Kraftmesszelle 8 misst. Die Kraftmesszelle 8 stützt sich am Rohrbogen 1 oder einem mit diesem verbundenen Teil, beispielsweise der Speiche 64 ab. Es ist vorgesehen, die Kräfte nach beiden Richtungen, ausgehend von einer Nullstellung zu messen.

Die Zufuhrförderleitung 4 erstreckt sich horizontal und ist ausreichend lang und gerade, um eine Verstetigung der Luft- und Fördergutgeschwindigkeit zu gewährleisten. Dies bedeutet, dass die Luftgeschwindigkeit im konstanten Verhältnis zur Fördergutgeschwindigkeit steht. Die Anlage wird in reiner Flugförderung betrieben, d.h. mit einer Luftgeschwindigkeit von 20 m/s und mehr. Es wird mit einem Überdruck im Bereich von 0,3 bis 0,5 bar, gelegentlich bis 0,7 bar gefahren. Es kommen jedoch Druckschwankungen in der Förderleitung vor, insbesondere durch schwankende Aufnahme des Massestromes wegen nachgeschalteter Aggregate, oder durch Veränderungen in der pneumatischen Förderleitung, wie sie durch Anbackungen oder Stopfer auftreten können. Diese Druckschwankungen können 10% des Soll-Druckes betragen.

Im Messbetrieb der Vorrichtung durchläuft der Massestrom die pneumatische Förderleitung unter Einschluss des Rohrbogens 1, und wenn Druckschwankungen vorkommen, gelangen diese Druckschwankungen durch die Ausgleichsleitung 74 in den Hohlraum 70 des Druckschwankungskompensators 7, wo aufgrund der Endfläche des Rohrabschnittes 71 eine horizontale Kraft erzeugt wird, die der Druckschwankungskraft im Rohrbogen 1 entgegengesetzt ist. Zusammen mit den Hebelarmen l1, beziehungsweise l7, ergeben sich ein Drehmoment und ein Gegendrehmoment gleicher Größe, die sich aufheben. Somit wird der Fehlersinfluss in Folge der Druckschwankung kompensiert. Die Kraftmesszelle 8 misst deshalb nur eine auf die Umlenkung des Förderguts zurückgehende Kraft.

Diese Kraft wird einer Rechen- und Auswerteeinrichtung 9 zugeführt, welche die gemessene Reaktionskraft als zeitliche Änderung des Impulses interpretiert. Unter Zuhilfenahme der Fördergeschwindigkeit des Fördergutes lässt sich der Massestrom errechnen. Es gilt die Formel

$$F = 2 \cdot Q \cdot (p + \rho \cdot v^2) \sin \alpha/2$$

mit

F = Aktionskraft auf den Rohrbogen,
Q = Querschnittsfläche des Rohrbogens,
p= statischer Überdruck im Rohrbogen,
$\rho$ = Dichte des Förderstromes,
v = Geschwindigkeit des Förderstromes,
$\alpha$ = Rohrbogenwinkel
m = Massestrom.

Mit der Druckschwankungskompensation wird der Einfluss des schwankenden, statischen Druckes aufgehoben, d.h. p = 0. Damit wird

$$F = 2 \cdot \sin\frac{\alpha}{2} \, (Q \cdot \rho \cdot v^2)$$

Mit der Definition für den Massestrom m

$$m = Q \cdot \rho \cdot v$$

Ergibt sich durch einsetzen in die Gleichung:

$$m = F/(2 \, \sin\alpha/2 \cdot v)$$

Mit $\alpha$ = 90° ergibt sich dann:

$$m = F/(1{,}41 \cdot v)$$

Wobei F hier die Reaktionskraft als zeitliche Änderung des Impulses bezeichnet. Mit zusätzlicher Messung der Fördergeschwindigkeit v kann somit der Massestrom bestimmt werden, und zwar mit sehr hoher Genauigkeit, da die Kraftmessung eine Genauigkeit von 0,01 bis 0,02 % gewährleistet und die Fördergeschwindigkeit regelmäßig konstant gehalten werden kann.

Bei einer Messanordnung ohne Kompensator wird die auf den Rohrbogen einwirkende Kraft infolge des schwankenden statischen Druckes über Drucksensoren ermittelt. Diese Kraft erzeugt am Hebelarm l1 ein Drehmoment, das einem Gegendrehmoment gleich ist, welcher der Gegenkraft an der Kraftmesszelle 8 und dem Hebelarm l8 zwischen Aufhängung 62 und Kraftmesszelle 8 entspricht. Die Gegenkraft wird bei der Ermittlung der Reaktionskraft F berücksichtigt.

Die Drucksensoren in Förderleitungen sind jedoch störanfällige Bauteile, weswegen die Bauweise mit dem Kompensator 7 bevorzugt wird.

Mit Hilfe des bekannten Querschnitts der Förderleitung und der Luftgeschwindigkeit kann auch die Beladung des Volumenstromes in der Förderleitung in jedem Augenblick der Messung berechnet werden. Somit kann die Gleichmäßigkeit der Masseförderung überwacht werden, indem die Größe des Massestromes oder die Beladung des Volumenstromes in einem Regelkreis rückgekoppelt wird, der auf die Förderbedingungen des Massenstromes einwirkt. Das Messergebnis kann auch lediglich zu Dokumentationszwecken ermittelt werden.

**Patentansprüche**

1. Vorrichtung zur Messung des Massestromes von Fördergut in einer pneumatischen Förderleitung, umfassend

   - eine Zufuhrförderleitung (4)
   - eine Abfuhrförderleitung (5)
   - einen Rohrbogen (1), dessen Enden über flexible Verbindungsmuffen (2, 3) mit der Zufuhrförderleitung (4) und der Abfuhrförderleitung (5) verbunden sind,
   - Mittel (8) zur Messung der auf den Rohrbogen (1) ausgeübten Reaktionskraft infolge des Schüttgutmassestromes,
   - eine Recheneinrichtung (9), um über die gemessene Reaktionskraft den augenblicklichen Massestrom zu errechnen,
   - Mittel zur Erfassung der Wirkung von Druckschwankungen in der Förderleitung, und
   - Mittel (6) zur schwebenden Aufhängung des Rohrbogens (1) vorhanden sind,

   die eine frei drehbare Lagerung des Rohrbogens (1) aufweisen, wobei diese eine gerätefeste Schwenklagerstelle (60, 61) umfasst, die mit einer Achse (62) kooperiert, welche über eine Nabe (63) und Speichen (64) den Rohrbogen (1) pendelnd trägt.

2. Messvorrichtung nach Anspruch 1, wobei der Rohrbogen (1) sich über 90° erstreckt und mit einem vertikalen Eintrittsquerschnitt beginnt und einem horizontalen Austrittsquerschnitt endet.

3. Messvorrichtung nach Anspruch 1 oder 2, wobei die Mittel zur Erfassung der Wirkung von Druckschwankungen in der Förderleitung eine Druckschwankungskompensationseinrichtung (7) aufweisen, die einen Hohlraum (70) enthält, der durch eine flexible Verbindungsmuffe (73) in einen ersten und zweiten Abschnitt unterteilt ist, wobei der erste Abschnitt (71) mit dem Rohrbogen (1) starr verbunden ist und das Innere des Rohrbogens (1) über eine Ausgleichsleitung (74) mit dem Hohlraum (70) der Druckkompensationseinrichtung (7) in Verbindung steht, während der zweite Abschnitt (72) des Hohlraums (70) gerätefest abgestützt ist.

**4.** Messvorrichtung nach Anspruch 3, wobei der erste und zweite Abschnitt der Druckschwankungskompensationseinrichtung (7) durch ein jeweiliges Rohrstück (71, 72) mit geschlossenem Ende gebildet werden, dessen Querschnitt (Q7) gegenüber dem Querschnitt (Q1) des Rohrbogens (1) um einen Proportionalitätsfaktor (l1/l7) gemäß der Abstände (l1, l7) des Rohrbogens (1), beziehungsweise des Kompensators (7), von der Aufhängung (62) verändert ist.

**5.** Messvorrichtung nach einem der Ansprüche 1 bis 4, wobei die Mittel zur Erfassung der Wirkung von Druckschwankungen in der Förderleitung Drucksensoren umfassen, die den augenblicklichen Druck in der Förderleitung (4, 5) ermitteln, und wobei die Recheneinrichtung (9) aus Rohrbogenquerschnitt (Q1) und dem Abstand (l1) des Querschnitts von der Aufhängung unter Berücksichtigung des Abstandes (l8) der Reaktionskraft-Messmittel (8) von der Aufhängung eine Korrekturkraft zur ausgeübten Reaktionskraft auf den Rohrbogen (1) errechnet, um die Druckschwankungen in der Förderleitung (4, 5) zu berücksichtigen.

**6.** Messvorrichtung nach einem der Ansprüche 1 bis 5, wobei Mittel (8) zur Messung der Reaktionskraft sich an den Mitteln (6) zur schwebenden Aufhängung des Rohrbogens (1) abstützen.

**7.** Messvorrichtung nach einem der Ansprüche 1 bis 6, wobei die Recheneinrichtung (9) die Reaktionskraft als zeitliche Änderung des Impulses interpretiert und daraus sowie aus der Fördergeschwindigkeit (v) des Fördergutes den Massestrom (m) nach der Formel berechnet:

$$m = F / (2 \sin \alpha/2 \cdot v)$$

mit
F = Reaktionskraft auf den Rohrbogen (1), $\alpha$ = Zentriwinkel des Rohrbogens (1), v = Geschwindigkeit des Förderstromes.

## Claims

**1.** A device for measuring the mass flow of conveyed materials in a pneumatic conveyor line, comprising:

- a feed conveyor line (4);
- a discharge conveyor line (5);
- a pipe bend (1), whose ends are connected to the feed conveyor line (4) and the discharge conveyor line (5) via flexible coupling sleeves (2, 3);
- means (8) for measuring the reaction force applied to the pipe bend (1) as a result of the bulk material mass flow;
- an arithmetic unit (9) for calculating the instantaneous mass flow via the measured reaction force;
- means for detecting the effect of pressure fluctuations in the conveyor line; and
- means (6) for the floating suspension of the pipe bend (1) are present, which have a freely rotatable bearing of the pipe bend (1), the latter having a device-fixed pivot bearing point (60, 61), which cooperates with an axis (62), which carries the pipe bend (1) in an oscillating manner via a hub (63) and spokes (64).

**2.** The measuring device according to Claim 1, wherein the pipe bend (1) extends over 90° and begins with a vertical entry cross section and ends with a horizontal exit cross section,

**3.** The measuring device according to Claim 1 or 2, wherein the means for detecting the effect of pressure fluctuations in the conveyor line has a pressure fluctuation compensation unit (7), which contains a cavity (70), which is divided by a flexible coupling sleeve (73) into a first and a second section, the first section (71) being rigidly connected to the pipe bend (1), and the interior of the pipe bend (1) being in communication with the cavity (70) of the pressure compensation unit (7) via a compensating line (74), while the second section (72) of the cavity (70) is fixedly supported on the device.

**4.** The measuring device according to Claim 3, wherein the first and second sections of the pressure fluctuation compensation unit (7) Is formed by a particular pipe piece (71, 72) having a closed end, whose cross section (Q7) is varied with respect to the cross section (Q1) of the pipe bend (1) by a proportionality factor (11/17) according to the distances (11, 17) of the pipe bend (1) and the compensator (7) from the suspension (62).

**5.** The measuring device according to one of Claims 1 through 4, wherein the means for detecting pressure fluctuations in the conveyor line include pressure sensors, which ascertain the instantaneous pressure in the conveyor line (4, 5), and the arithmetic unit (9) calculates a correcting force for the reaction force applied to the pipe bend (1) from the pipe bend cross section (Q1) and the distance (11) of the cross section from the suspension, taking into account the distance (18) of the reaction force measuring means (8) from the suspension, for the purpose of taking into account the pressure fluctuations in the conveyor line (4, 5).

**6.** The measuring device according to one of Claims 1 through 5, wherein means (8) for measuring the reaction force are supported on the means (6) for the floating suspension of the pipe bend (1).

7. The measuring device according to one of Claims 1 through 6, wherein the arithmetic unit (9) interprets the reaction force as a time change of the pulse and calculates the mass flow (m) therefrom as well as from the conveying velocity (v) of the conveyed material according to the formula:

$$m = F / (2 \sin \alpha/2 \cdot v)$$

where:
F = reaction force on the pipe bend (1), $\alpha$ = central angle of the pipe bend (1), v = velocity of the conveyed material flow.

**Revendications**

1. Dispositif destiné à la mesure du flux de masse de matières à transporter dans une conduite de transport pneumatique, comprenant

   - une conduite de transport d'amenée (4)
   - une conduite de transport d'évacuation (5)
   - un coude tubulaire (1) dont les extrémités sont raccordées à la conduite de transport d'amenée (4) et à la conduite de transport d'évacuation (5) par le biais de manchons de raccordement (2, 3) flexibles,
   - des moyens (8) destinés à la mesure de la force de réaction exercée sur le coude tubulaire (1) du fait du flux de masse des matières en vrac.
   - un équipement de calcul (9) pour calculer le flux de masse instantané par le biais de la force de réaction mesurée,
   - des moyens destinés à la détection de l'effet de fluctuations de pression dans la conduite de transport,
   - il existe des moyens (6) destinés à la suspension flottante du coude tubulaire (1),

   qui présentent un support du coude tubulaire (1) qui peut tourner librement, ce support comprenant un point de support pivotant (60, 61), fixe par rapport à l'appareil, qui coopère avec un axe (62) qui porte de façon pendulaire le coude tubulaire (1) par le biais d'un moyeu (63) et de rayons (64).

2. Dispositif de mesure selon la revendication 1, le coude tubulaire (1) s'étendant sur 90°, et commençant par une section transversale d'entrée verticale et se terminant par une section transversale de sortie horizontale.

3. Dispositif de mesure selon la revendication 1 ou 2, les moyens destinés à la détection de l'effet de fluctuations de pression dans la conduite de transport présentant un équipement de compensation (7) des fluctuations de pression qui contient une cavité (70) qui est divisée en un premier et un deuxième tronçon par un manchon de raccordement (73) flexible, le premier tronçon (71) étant raccordé de façon rigide au coude tubulaire (1), et l'intérieur du coude tubulaire (1) étant en liaison avec la cavité (70) de l'équipement de compensation (7) des fluctuations de pression par le biais d'une conduite d'équilibrage (74) tandis que le deuxième tronçon (72) de la cavité (70) est supporté de façon fixe par rapport à l'appareil.

4. Dispositif de mesure selon la revendication 3, la premier et le deuxième tronçon de l'équipement de compensation (7) des fluctuations de pression étant formés d'une pièce tubulaire (71, 72) respective, dotée d'une extrémité fermée, dont la section transversale (Q7), par rapport à la section transversale (Q1) du coude tubulaire (1), est modifiée selon un facteur de proportionnalité (l1/l7) en fonction des distances (l1/l7) du coude tubulaire (1), ou respectivement du compensateur (7), par rapport à la suspension (62).

5. Dispositif de mesure selon l'une des revendications 1 à 4, les moyens destinés à la détection de l'effet de fluctuations de pression dans la conduite de transport comprenant des capteurs de pression qui déterminent la pression instantanée dans la conduite de transport (4, 5), et l'équipement de calcul (9) calculant, à partir de la section transversale tubulaire (Q1 du coude tubulaire) et de la distance (l1) de la section transversale par rapport à la suspension, en prenant en compte la distance (l8) des moyens (8) de mesure de la force de réaction par rapport à la suspension, une force de correction pour la force de réaction exercée sur le coude tubulaire (1) afin de prendre en compte les fluctuations de pression dans la conduite de transport (4, 5).

6. Dispositif de mesure selon l'une des revendications 1 à 5, des moyens (8) destinés à la mesure de la force de réaction s'appuyant sur les moyens (6) destinés à la suspension flottante du coude tubulaire (1).

7. Dispositif de mesure selon l'une des revendications 1 à 6, l'équipement de calcul (9) interprétant la force de réaction en tant que variation dans le temps de l'impulsion et calculant à partir de cela, ainsi qu'à partir de la vitesse de transport (v) des matières transportées, le flux de masse (m) selon la formule :

$$m = F / (2 \sin \alpha/2 \cdot v)$$

où

F = force de réaction sur le coude tubulaire (1), α = angle au centre du coude tubulaire (1), v = vitesse du flux de transport.

Fig. 1

Fig. 2

EP 2 477 010 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004033007 B3
- EP 0717269 A2
- EP 0703447 A2
- JP 58086415 A